# EUROPÄISCHE PATENTSCHRIFT

(11) **EP 2 335 848 B1**
(45) Veröffentlichungstag und Bekanntmachung des Hinweises auf die Patenterteilung: **20.08.2014**
(21) Anmeldenummer: 09015074.9
(22) Anmeldetag: 04.12.2009
(51) Int. Cl.: B22F 3/105, B29C 67/00

(54) **Optische Bestrahlungseinheit für eine Anlage zur Herstellung von Werkstücken durch Bestrahlen von Pulverschichten mit Laserstrahlung**
Optical irradiation unit for an assembly for producing workpieces by means of irradiating powder layers with laser radiation
Unité de rayonnement optique pour une installation destinée à la fabrication de pièces à usiner par rayonnement de couches de pulvérisation avec un rayonnement laser

(43) Veröffentlichungstag der Anmeldung: 22.06.2011
(73) Patentinhaber: SLM Solutions GmbH, 23556 Lübeck (DE)
(72) Erfinder: Schwarze, Dieter, Dr., 33109 Paderborn (DE); Schöneborn, Henner, Dipl.-Ing., 23556 Lübeck (DE); Wiesner, Andreas, 23628 Lübeck-Krummesse (DE)
(74) Vertreter: Schicker, Silvia

(56) Entgegenhaltungen:
- WO-A2-01/96452
- JP-A- 2001 252 986
- JP-A- 2004 188 604
- JP-A- 2006 027 085
- JP-A- 2006 044 017
- CHOI, T.-Y., CHIMMALGI, A.,GRIGOROPOULOS, C.P.,: "Ultrafast laser-induced processing of materials: fundamentals and applications in micromachining" PROCEEDINGS OF SPIE, Bd. 4637, 15. April 2003 (2003-04-15), Seiten 204-211, XP002570075
- KO, S.H., PAN, H., HWANG, D.J., CHUNG, J., RYU, S., GRIGOROPOULOS, C.P, AND POULIKAKOS, D: "High Resolution Selective Multilayer Laser Processing by Nanosecond Laser Ablation of Metal Nanoparticle Films" JOURNAL OF APPLIED PHYSICS, Bd. 102, 093102, 5. November 2007 (2007-11-05), Seiten 1-9, XP002570076
- DEBASHIS CHANDA , LADAN E. ABOLGHASEMI AND PETER R. HERMAN: "Single laser exposure fabrication of diamond-like 3-dimensional photonic crystal microstructures using circularly polarized light" APPLIED PHYSICS A: MATERIALS SCIENCE & PROCESSING, Bd. 93, 11. Juni 2008 (2008-06-11), Seiten 33-37, XP002570136

## Beschreibung

Die vorliegende Erfindung betrifft eine Anlage zur Herstellung von Werkstücken durch Bestrahlen von Pulverschichten mit Laserstrahlung, insbesondere eine Laserschmelz- oder Lasersinteranlage, sowie ein zugehöriges Verfahren.

Das selektive Laserschmelzen oder Lasersintern ist ein generatives Schichtbauverfahren, durch das pulverförmige, insbesondere metallische und/oder keramische Rohstoffe zu komplex geformten dreidimensionalen Werkstücken verarbeitet werden können. Hierzu wird eine Rohstoffpulverschicht auf einen Träger aufgebracht und in Abhängigkeit der gewünschten Geometrie des zu erstellenden Werkstücks ortselektiv mit Laserstrahlung beaufschlagt. Die in die Pulverschicht eindringende Laserstrahlung bewirkt eine Erwärmung und folglich eine Verschmelzung oder Versinterung der Rohstoffpulverpartikel. Anschließend werden sukzessiv weitere Rohstoffpulverschichten auf die bereits laserbehandelte Schicht auf dem Träger aufgebracht bis das Werkstück die gewünschte Form und Größe hat. Selektives Laserschmelzen oder Lasersintern kann insbesondere zur Herstellung von Prototypen, Werkzeugen, Ersatzteilen oder medizinischen Prothesen, wie zum Beispiel zahnärztlichen oder orthopädischen Prothesen anhand von CAD-Daten eingesetzt werden.

Eine aus der EP 1 793 979 A1 bekannte Anlage zur Herstellung von Formkörpern aus pulverförmigen Rohstoffen durch selektives Laserschmelzen umfasst einen unter einer Schutzgasatmosphäre gehaltenen Prozessraum mit einer Bodenplatte, in dem eine Mehrzahl von Trägern angeordnet ist. Eine Pulverschicht-Präparierungseinrichtung umfasst einen Pulverreservoirhalter, der mittels eines Spindeltriebs über die Träger hin- und herbewegt werden kann, und dient dazu, Rohstoffpulver auf die Träger aufzubringen. Der Prozessraum ist durch vertikale Trennwände in mehrere Prozessraumabteite unterteilt, für welche eine gemeinsame Bestrahlungseinrichtung vorgesehen ist. Zu der Bestrahlungseinrichtung gehört ein Laser, welcher über eine Lichtleitfaser Laserstrahlung für eine Strahlablenkeinrichtung bereitstellt. Der von der Strahlablenkeinrichtung abgelenkte Laserstrahl wird mittels einer f-Theta-Linse auf die jeweils zuletzt präparierte Pulverschicht auf einem betreffenden Träger fokussiert.

Falls in den einzelnen Prozessraumabteilen der bekannten Anlage mit unterschiedlichen Pulvermaterialien gearbeitet wird, kann die Strahlungsintensität der Laserstrahlung pro Abteil individuell eingestellt werden, um unterschiedlichen Materialeigenschaften der Pulver gerecht zu werden. In entsprechender Weise kann auch die Bestrahlungswellenlänge variierbar sein und es können ein spektral durchstimmbarer Laser oder gegebenenfalls mehrere Laser unterschiedlicher Emissionswellenlängen für die Bestrahlung der Pulverschichten in den verschiedenen Prozessraumabteilen verwendet werden.

Eine solche Realisierung berücksichtigt zwar unterschiedliche Materialeigenschaften der Pulver in den verschiedenen Prozessraumabteilen, vermindert jedoch nicht die Probleme, die in den jeweiligen Prozessraumabteilen auftreten. Aufgrund der hohen Intensität der Laserstrahlung kommt es durch den auf die Pulverschicht auftreffenden Laserstrahl nicht nur zu dem gewünschten Vorgang des Laserschmelzens oder Lasersinterns, sondern auch zu unerwünschten Vorgängen, wie dem Verdampfen von Rohstoffpulver und dem Auftreten von Spritzern während der Bearbeitung. Zudem können unerwünschte Effekte, wie hohe thermische Gradienten, in dem Rohstoffpulver Auswirkungen auf die Qualität des gefertigten Werkstücks haben, in welchem es zum Beispiel zu der Ausprägung von Eigenspannungen kommen kann.

Zur Reduzierung von hohen Eigenspannungen in SLM^{®} (Selective Laser Melting) oder SLS (Selective Laser Sintering) Bauteilen oder Werkstücken, wird gewöhnlicher Weise versucht, das Rohstoffpulver vorzuheizen, um dadurch die zu den hohen Eigenspannungen führenden thermischen Gradienten zu verringern bzw. zu eliminieren. Hierfür ist es bekannt, in der Anlage unter der Bodenplatte des Prozessraums eine Heizleistung zu generieren und über Wärmeleitung in das Pulver zu übertragen, um das Pulver vorzuheizen. Aufgrund seiner sehr geringen Wärmeleitung ist das Pulver gewöhnlicher Weise eher ein Isolator als ein Wärmeleiter. Dadurch wird das Rohstoffpulver ineffizient vorgeheizt und es geht viel Wärmeleistung verloren.

Das Dokument XP-002570075 (Ultra-fast laser-induced processing of materials: fundamentals and applications in micromachining by Choi, T. Y. et al.) beschreibt eine Anordnung, in der ein Laserstrahl mittels eines Strahlteilers in zwei Teillaserstrahlen aufgeteilt wird und die zwei Teillaserstrahlen mittels eines polarisierenden Strahlteilers wieder zu einem Laserstrahl zu koppeln.

XP-002570076 (High resolution selective multilayer laser processing by nansecond laser ablation of metal nanoparticle films by Ko, S. H. et al.) offenbart wie ein Nitridlaserstrahl einer Wellenlänge von 440 nm in einen YAG-Laserstrahl einer Wellenlänge von 532 nm eingekoppelt wird und der gekoppelte Laserstrahl einen Nanopartikelfilm bestrahlt.

Die JP 2004188604 A beschreibt eine Vorrichtung zur Herstellung eines 3-dimensional geformten Körpers. Die Vorrichtung umfasst eine Lichtquelle, ein polarisationsseparierendes Element sowie reflektierende Mittel. Das polarisationsseparierende Element teilt den von der Lichtquelle einfallenden Lichtstrahl in einen P-polarisierten Lichtstrahl sowie einen S-polarisierten Lichtstrahl auf.

Es ist eine Aufgabe der vorliegenden Erfindung eine Anlage zur Herstellung von Werkstücken durch Bestrahlen von Pulverschichten eines Rohstoffpulvers mit Laserstrahlung und ein zugehöriges Verfahren bereitzustellen, mittels weichen effizienter und optimierter Werkstücke mit verbesserten Eigenschaften hergestellt werden können.

Diese Aufgabe wird durch eine Anlage zur Herstellung von Werkstücken durch Bestrahlen von Pulverschichten eines Rohstoffpulvers mit Laserstrahlung mit den Merkmalen des unabhängigen Anspruchs 1 sowie ein zugehöriges Verfahren mit den Merkmalen des unabhängigen Anspruchs 12 gelöst. Vorteilhafte Weiterbildungen ergeben sich jeweils aus den abhängigen Ansprüchen.

Eine optische Bestrahlungseinheit einer Anlage zur Herstellung von Werkstücken durch Bestrahlen von Pulverschichten eines Rohstoffpulvers mit Laserstrahlung umfasst optische Komponenten zum Führen und Fokussieren eines Strahlengangs eines ersten Laserstrahls und eine optische Teil- bzw. Koppeleinheit. Die optische Teil- bzw. Koppeleinheit ist dazu ausgebildet, den ersten Laserstrahl in zumindest zwei Teillaserstrahlen aufzuteilen. Ferner kann die optische Teil- bzw. Koppeleinheit dazu ausgebildet sein, einen zweiten Laserstrahl in den Strahlengang des ersten Laserstrahls einzukoppeln. Im ersten Fall des Aufteilens des ersten Laserstrahls in die zumindest zwei Teillaserstrahlen, ist die optische Teil- bzw. Koppeleinheit dazu ausgebildet, derart den ersten Laserstrahl in die zumindest zwei Teillaserstrahlen aufzuteilen, dass die Intensität der Teillaserstrahlen selbst zumindest nahezu gleich hoch ist, die Intensität jedes Teillaserstrahls jedoch von der Gesamtintensität des ersten Laserstrahls verschieden ist. Im zweiten Fall des Einkoppelns des zweiten Laserstrahls in den Strahlengang des ersten Laserstrahls, ist die optische Teil- bzw. Koppeleinheit dazu ausgebildet, den zweiten Laserstrahl mit einer von der Wellenlänge des ersten Laserstrahls verschiedenen Wellenlänge in den Strahlengang des ersten Laserstrahls einzukoppeln. Vorzugsweise weisen der erste Laserstrahl eine Wellenlänge zwischen 1050 nm und 1100 nm, insbesondere von 1064 nm bis 1075 nm, und der zweite Laserstrahl eine Wellenlänge zwischen 800 nm und 1000 nm, insbesondere von 808 nm bis 980 nm, auf.

Die optische Teil- bzw. Koppeleinheit kann sowohl zum Aufteilen des ersten Laserstrahls als auch zum Einkoppeln des zweiten Laserstrahls ausgebildet sein. Zumiridest weist sie jedoch eine optische Teileinheit auf, die zum Aufteilen des ersten Laserstrahls in die zumindest zwei Teillaserstrahlen mit einer jeweils gleich hohen und von der Intensität des ersten Laserstrahls abweichenden Intensität ausgebildet ist.

Zum Aufteilen des ersten Laserstrahls in die zumindest zwei Teillaserstrahlen weist die optische Teil- bzw. Koppeleinheit oder die optische Teileinheit der optischen Teil- bzw. Koppeleinheit ein diffraktives optisches Element auf. Das diffraktive optische Element ist beispielsweise in dem Strahlengang des ersten Laserstrahls angeordnet und kann durch das Aufteilen des ersten Laserstrahls ein erstes Strahlprofil (Querschnittsprofil) des ersten Laserstrahls erzeugen. Sowohl für das Strahlprofil jedes Teillaserstrahls als auch für das aus allen Teillaserstrahlen gebildete Gesamtstrahlprofil des ersten Laserstrahls sind eine Vielzahl von Ausgestaltungen denkbar.

Beispielsweise weist jeder der mittels des diffraktiven optischen Elements erzeugten Teillaserstrahlen ein kreisförmiges Strahlprofil mit gaußförmiger Intensitätsverteilung auf. Bei einem derartigen Strahlprofil befindet sich die höchste Intensität des Strahls im Mittelpunkt des kreisförmigen Teillaserstrahlprofils und nimmt gemäß der Gaußverteilung nach außen hin ab. Auch ist es denkbar für jeden Teillaserstrahl ein rechteckiges Strahlprofil, insbesondere ein quadratisches Strahlprofil (ein sogenanntes Top-Hat Strahlprofil), mit gleichförmiger Intensitätsverteilung zu erzeugen. Bei einem solchen rechteckigen, insbesondere quadratischen, Strahlprofil ist an jeder Stelle innerhalb des rechteckigen Strahlprofils die Intensität der Laserstrahlung zumindest nahezu gleich groß. Wird eine Pulverschicht eines Rohstoffpulvers mit dieser gleichförmigen Intensitätsverteilung beaufschlagt, führt dies in allen Bearbeitungssituationen zu einem gleichmäßigen Ergebnis beim Schmelzen oder Sintern. Dadurch werden Prozessinstabilitäten vermieden oder zumindest verringert, die durch innerhalb des Teilstrahlprofils lokal auftretende Intensitätsspitzen hervorgerufen werden.

Unabhängig von den erzeugten Teillaserstrahlprofilen kann die optische Teil- bzw. Koppeleinheit, vorzugsweise das darin angeordnete diffraktive optische Element, dazu ausgebildet sein, den ersten Laserstrahl in mehr als zwei, insbesondere in neun, Teillaserstrahlen aufzuteilen. Die Gesamtintensität des ersten Laserstrahls wird durch die Aufteilung vorzugsweise gleichmäßig auf jeden Teillaserstrahl verteilt, so dass, im Falle des Aufteilens des ersten Laserstrahls in neun Teillaserstrahlen, jeder Teillaserstrahl ein Neuntel der Intensität des ersten Laserstrahls aufweist. Beispielsweise kann das diffraktive optische Element auf verschiedene Weise aus den Strahlprofilen der zumindest zwei, beispielsweise neun, Teillaserstrahlen ein aus den Teillaserstrahlprofilen gebildetes Gesamtstrahlprofil in einer zu dem Strahlengang des ersten Laserstrahls senkrechte Ebene formen. So können im Falle von neun Teillaserstrahlen diese Teillaserstrahlen so von dem diffraktiven optischen Element aufgeteilt und angeordnet werden, dass in der zu dem Strahlengang senkrechten Ebene ein zumindest nahezu rechteckiges oder quadratisches Gesamtstrahlprofil entsteht.

Das zumindest nahezu rechteckige oder quadratische Gesamtstrahlprofil kann sowohl im Falle einer gaußschen als auch einer gleichförmigen Intensitätsverteilung in jedem Teillaserstrahlprofil gebildet werden. Beispielsweise wird der erste Laserstrahl derart in neun Teillaserstrahlen aufgeteilt, dass jeweils drei Teillaserstrahlen die Seiten des Quadrats bilden, so dass ein quadratisches Feld aus drei mal drei Teillaserstrahlen entsteht.

Im Falle von Teillaserstrahlen mit einer gaußförmigen Intensitätsverteilung wird das gebildete Gesamtstrahlprofil des ersten Laserstrahls vorzugsweise so über eine Rohstoffpulverschicht geführt, dass in Folge der ungleichförmigen Intensitätsverteilung zunächst schwächer bestrahlte Positionen wiederholt bestrahlt werden. Beispielsweise wird das gebildete Gesamtstrahlprofil sequenziell überlappend über die Pulverschicht geführt, um eine gleichmäßige Bestrahlung zu gewährleisten. Im Falle von rechteckigen Teillaserstrahlprofilen mit gleichförmiger Intensitätsverteilung (Top-Hat Profilen) kann von einer solchen sequenziellen Überlappung des Gesamtstrahlprofils abgesehen werden, da nicht nur in den jeweiligen Teillaserstrahlen selbst, sondern auch in dem durch die Teillaserstrahlen gebildeten Gesamtlaserstrahlprofil eine zumindest nahezu gleichmäßige Intensitätsverteilung gegeben ist. Dadurch können sequenziell unterschiedliche, sich nicht überlappende Bereiche der Pulverschicht bestrahlt werden. Auf diese Weise kann schneller ein gleichmäßiges Aufschmelzen oder Sintern der Pulverschichten und damit eine schnellere und effizientere Herstellung der Werkstücke erfolgten.

Zusätzlich zu dem ersten diffraktiven optischen Element kann die optische Teil- bzw. Koppeleinheit oder die in der optischen Teil- bzw. Koppeleinheit umfasste optische Teileinheit weiter ein zweites diffraktives optisches Element zum Erzeugen eines von dem ersten Strahlprofil verschiedenen zweiten Strahlprofils des ersten Laserstrahls aufweisen. Beide diffraktive optische Elemente können in den Strahlengang des ersten Laserstrahls hineinbringbar und aus diesem herausbringbar ausgebildet sein. Beispielsweise ist das erste diffraktive optische Element zunächst in dem Strahlengang des ersten Laserstrahls vorhanden und das zweite diffraktive optische Element wird, zum Beispiel in Reaktion auf eine Anweisung einer mit der optischen Bestrahlungseinheit verbundenen Steuereinheit, ebenfalls in den Strahlengang des ersten Laserstrahls eingebracht. Das zweite diffraktive optische Element kann zusätzlich zu dem ersten diffraktiven optischen Element in den Strahlengang eingebracht, beispielsweise in den Strahlengang geklappt, werden, oder anstelle des ersten diffraktiven optischen Elements in diesen eingebracht werden, indem zum Beispiel das erste diffraktive optische Element aus dem Strahlengang herausgeklappt wird, wenn das zweite diffraktive optische Element hineingeklappt wird.

Beispielsweise wird für eine flächige Belichtung oder Bestrahlung (in den sogenannten Hatches) der Pulverschicht ein anderes Strahlprofil gewünscht als für die äußeren Konturen (Boundaries) des zu formenden Werkstücks. Im Einklang damit kann für die Hatches ein anderes diffraktives optisches Element in den Strahlengang geklappt werden als für die Boundaries. Auf diese Weise wird z.B. das erste diffraktive optische Element zur Erzeugung des ersten Strahlprofils zur Bestrahlung der Hatches in den Strahlengang eingebracht. Zur Formung der Boundaries kann das erste diffraktive optische Element aus dem Strahlengang hinausbewegt werden und anstelle dessen das zweite diffraktive optische Element in den Strahlengang hineinbewegt werden. Auf diese Weise kann flexibel mit der optischen Bestrahlungseinheit auf bestimmte Anorderungen an das zu fertigende Werkstück eingegangen werden.

Eine erfindungsgemäße Anlage zur Herstellung von Werkstücken durch Bestrahlen von Pulverschichten eines Rohstoffpulvers mit Laserstrahlung umfasst einen Träger, auf welchen Pulverschichten des Rohstoffpulvers aufbringbar sind, eine optische Bestrahlungseinheit und eine erste Bestrahlungsquelle zum Bereitstellen des ersten Laserstrahls. Die optische Bestrahlungseinheit der erfindungsgemäßen Anlage zur Herstellung von Werkstücken durch Bestrahlen von Pulverschichten eines Rohstoffpulvers mit Laserstrahlung ist eine oben beschriebene optische Bestrahlungseinheit. Die optische Bestrahlungseinheit ist dazu ausgebildet und derart in der Anlage angeordnet, eine auf dem Träger aufgebrachte Pulverschicht mit den Teillaserstrahlen zu bestrahlen, um aus dem Rohstoff durch ein generatives Schichtbauverfahren ein Werkstück herzustellen.

Im Betrieb der erfindungsgemäßen Anlage wird der erste Laserstrahl über die auf dem Träger aufgebrachten Rohstoffpulverschicht geführt, so dass die auf dem Träger aufgebrachte Rohstoffschicht ortselektiv mit Laserstrahlung beaufschlagt bzw. bestrahlt wird. Der durch die Bestrahlung mit Laserstrahlung verursachte Wärmeeintrag in die Rohstoffpuiverschicht bewirkt, dass die einzelnen Partikel des Rohstoffpulvers in der Rohstoffpulverschicht miteinander verschmelzen bzw. versintern und dadurch ein schichtweiser Werkstückaufbau erfolgt.

Die Anlage kann eine zweite Bestrahlungsquelle zur Bereitstellung des zweiten Laserstrahls aufweisen oder mit einer solchen verbunden sein. Ferner kann die Anlage eine Steuereinrichtung aufweisen, welche dazu eingerichtet ist, die optische Bestrahlungseinheit derart zu steuern, dass der erste Laserstrahl und der zweite Laserstrahl am gleichen Punkt auf der Pulverschicht auftreffen. Hierzu stellt beispielsweise die Steuereinrichtung Anweisungen an der optischen Teil- bzw. Koppeleinheit bzw. an der in dieser umfassten optischen Koppeleinheit und/oder an den optischen Komponenten bereit, welche in Antwort darauf derart eingestellt werden, dass eine Einkopplung des zweiten Laserstrahls in den Strahlengang des ersten Laserstrahls so erfolgt, dass beide Laserstrahlen am gleichen Punkt auf der Pulverschicht auftreffen. Die Steuereinrichtung kann auch Anweisungen erzeugen, die angeben, dass das erste diffraktive optische Element, das zweite diffraktive optische Element oder ein weiteres diffraktives optisches Element in den Strahlengang des ersten Laserstrahls eingebracht werden sollen.

Bevorzugt steuert die Steuereinrichtung die optische Bestrahlungseinheit derart, dass der erste Laserstrahl und der zweite Laserstrahl den gleichen Weg auf der Pulverschicht durchlaufen. Ebenso ist es denkbar, dass der erste Laserstrahl dem zweiten Laserstrahl um einen festen oder einstellbaren Versatz nachgeführt wird oder umgekehrt der zweite Laserstrahl dem ersten Laserstrahl um den festen oder einstellbaren Versatz nachgeführt wird. Beispielsweise wird als zweiter Laserstrahl ein kommerziell günstigerer Diodenlaserstrahl mit einer Wellenlänge von 808 nm bis 980 nm zur Unterstützung des ersten Laserstrahls mit einer Wellenlänge von 1064 nm bis 1075 nm bei dem Schmelz- bzw. Sinterprozess verwendet. Durch die Kombination des herkömmlich verwendeten SLM^{®}- oder SLS-Laserstrahls mit dem Diodenlaserstrahl können bei geringerem Kostenaufwand ähnliche Schmelz- bzw. Sinterergebnisse auf der Pulveroberfläche erreicht werden.

Auch kann der zweite Laserstrahl, zum Beispiel der Diodenlaserstrahl mit einer Wellenlänge von 808 nm bis 980 nm, zum ortselektiven Vorheizen Verwendung finden.

Dabei wird vorzugsweise der erste Laserstrahl durch die optische Bestrahlungseinheit auf einen bestimmten Fokuspunkt auf der Pulverschicht fokussiert, während der zweite Laserstrahl unfokussiert um den Fokus des ersten Laserstrahls auf die Pulverschicht auftrifft. Hierbei dient der erste Laserstrahl zum Schmelzen bzw. Sintern der Pulverschicht, während der zweite Laserstrahl, beispielsweise der Diodenlaserstrahl, zur ortselektiven Vorheizung verwendet wird. Die Vorheizung erfolgt dadurch, dass der zweite Laserstrahl, vorzugsweise ein Diodenlaserstrahl mit 808 nm, zur lokalen Aufheizung am Auftreffpunkt des eigentlichen (ersten) Laserstrahls, bevorzugt ein SLM^{®} oder SLS Laserstrahl mit 1075 nm, auftrifft. Diese ortselektive Vorheizung führt zu einer Reduktion des thermischen Gradienten an den vorgeheizten Positionen und damit zu Werkstücken mit geringeren Eigenspannungen.

Anstelle oder zusätzlich zu der zuvor beschriebenen ortselektiven Vorheizung mittels des zweiten Laserstrahls, kann die Anlage eine Vielzahl von Diodenlasern aufweisen, die über der auf dem Träger aufgebrachten Pulverschicht angeordnet sind. Jeder der Vielzahl von Diodenlasern gibt bevorzugt eine Diodenlaserstrahlung mit einer Wellenlänge von 808 nm bis 980 nm ab, um dadurch zumindest nahezu jede Stelle der Pulverschicht und dadurch zumindest nahezu die gesamte Pulverschicht homogen vorzuheizen. Sowohl mit dieser homogenen Vorheizung als auch mit der ortselektiven Vorheizung mittels des zweiten Laserstrahls kann die Pulveroberfläche direkt und unmittelbar homogen aufgeheizt werden, ohne zusätzlich noch Wärme an die Bauraumwände abzugeben. Während der Beschichtung des Trägers oder mehrerer Träger mit dem Pulver kann die Leistung der Laserdioden auf ein Minimum reduziert oder gegebenenfalls ganz abgeschaltet werden, um eine Aufheizung des Beschichters und eine unbeabsichtigte Strahlungseinwirkung auf andere Regionen über Reflexionen an metallischen Wänden zu verringern bzw. zu verhindern.

Im Gegensatz zu der Vorheizung mittels der unter der Bodenplatte erzeugten Heizleistung, wird sowohl bei der ortselektiven als auch bei der homogenen Vorheizung die Pulverobertläche direkt vorgeheizt. Durch diese effizientere Vorheizung des Pulvers werden thermische Gradienten eliminiert oder zumindest reduziert, so dass das Auftreten von Eigenspannungen in den Werkstücken vermieden oder zumindest verringert wird.

Bei dem erfindungsgemäßen Verfahren zur Herstellung von Werkstücken durch Bestrahlen von Pulverschichten eines Rohstoffpulvers mit Laserstrahlung mit Hilfe der zuvor beschriebenen Anlage wird eine Pulverschicht des Rohstoffpulvers auf einen Träger aufgebracht, ein erster Laserstrahl in zumindest zwei Teillaserstrahlen aufgeteilt, und die auf dem Träger aufgebrachte Pulverschicht mit den Teillaserstrahlen bestrahlt, um aus dem Rohstoff durch ein generatives Schichtbauverfahren ein Werkstück herzustellen. Die zumindest zwei Teillaserstrahlen weisen eine jeweils gleich hohe und von der Intensität der ersten Laserstrahlung verschiedene Intensität auf.

Bevorzugte Ausführungsformen der Erfindung werden nun anhand der beigefügten, schematischen Zeichnungen näher erläutert. Es zeigen:
- Figur 1: schematisch eine erste Ausführungsform einer optischen Bestrahlungseinheit;
- Figur 2: eine schematische Darstellung der in Figur 1 gezeigten ersten Ausführungsform einer optischen Bestrahlungseinheit als Teil einer Anlage zur Herstellung von Werkstücken;
- Figur 3: eine schematische Darstellung eines mittels der in Figur 1 gezeigten ersten Ausführungsform einer optischen Bestrahlungseinheit erzeugten Teilstrahlprofils;
- Figur 4: eine schematische Darstellung eines mittels der in Figur 1 gezeigten ersten Ausführungsform einer optischen Bestrahlungseinheit erzeugten Gesamtstrahlprofils;
- Figur 5: eine schematische Darstellung eines weiteren mittels der in Figur 1 gezeigten ersten Ausführungsform einer optischen Bestrahlungseinheit erzeugten Gesamtstrahlpröfils;
- Figur 6: eine schematische Darstellung einer zweiten Ausführungsform einer optischen Bestrahlungseinheit als Teil einer Anlage zur Herstellung von Werkstücken; und
- Figur 7: eine schematische Darstellung einer dritten Ausführungsform einer optischen Bestrahlungseinheit als Teil einer Anlage zur Herstellung von Werkstücken.

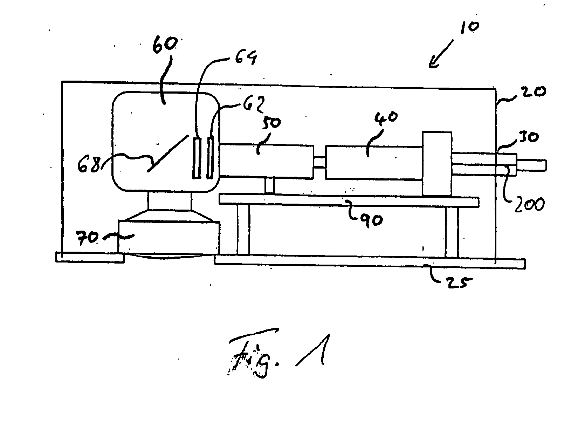

Figur 1 zeigt eine erste Ausführungsform einer optischen Bestrahlungseinheit 10 für eine Anlage zur Herstellung von Werkstücken durch Bestrahlen von Pulverschichten eines Rohstoffpulvers mit Laserstrahlung. Die optische Bestrahlungseinheit 10 weist ein hermetisch verschließbares Gehäuse 20 mit einer festen Basisplatte 25 auf. Über eine Öffnung 30 wird ein SLM^{®}- oder SLS-Laserstrahl 200 in der optischen Bestrahlungseinheit 10 bereitgestellt. Dieser SLM^{®}- oder SLS-Laserstrahl 200 weist eine Wellenlänge von 1075 nm auf. Auf einer Schiene 90 sind als optische Komponenten ein Strahlaufweiter 40 zum Aufweiten des SLM^{®}- oder SLS-Laserstrahls 200 sowie eine Fokussierlinse 50 zum Fokussieren des SLM^{®}- oder SLS-Laserstrahls 200 in einen Fokuspunkt verschiebbar angeordnet.

Ferner weist die optische Bestrahlungseinheit 10 eine Scannereinheit 60 und ein Objektiv 70 auf. Die Scannereinheit 60 und das Objektiv 70 sind gemäß der ersten Ausführungsform der optischen Bestrahlungseinheit 10 beispielhaft als Galvanometer-Scanner bzw. als f-theta Objektiv ausgebildet. Mittels der Scannereinheit 60 kann die Position des Fokus des SLM^{®}- oder SLS-Laserstrahls 200 sowohl in Richtung des Strahlengangs als auch in einer zu dem Strahlengang senkrechten Ebene verändert und angepasst werden.

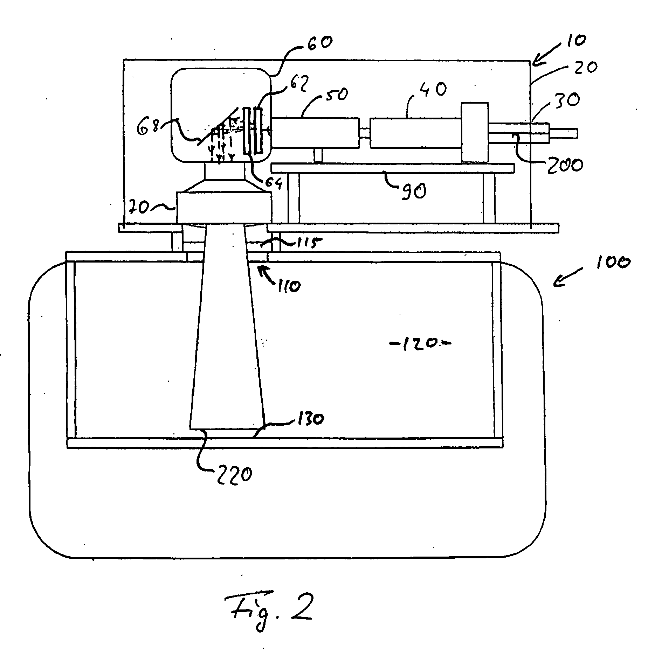

Figur 2 stellt schematisch dar, wie die optische Bestrahlungseinheit 10 mit einer Anlage 100 zur Herstellung von Werkstücken durch Bestrahlen von Pulverschichten eines Rohstoffpulvers mit Laserstrahlung verbunden ist, so dass der durch die optische Bestrahlungseinheit 10 bereitgestellte SLM^{®}- oder SLS-Laserstrahl 200 durch ein Fenster 110 einer Pulverkammer 120 der Anlage 100 zugeführt wird. Wie in Figur 2 gezeigt, sind der Strahlaufweiter 40, die Fokussiereinheit 50, die Scannereinheit 60 und das Objektiv 70 so ausgebildet und angeordnet, dass das Strahlprofil 220 des SLM^{®}- oder SLS-Laserstrahls 200 auf eine auf einem Träger 130 der Anlage 100 aufgebrachte Pulverschicht eines Rohstoffpulvers auftrifft. Das Fenster 110 ist durch eine 15 mm dicke Quarzplatte 115, welche für Laserlicht der gewählten Laserstrahlung von 1075 nm durchlässig ist, hermetisch abgeschlossen.

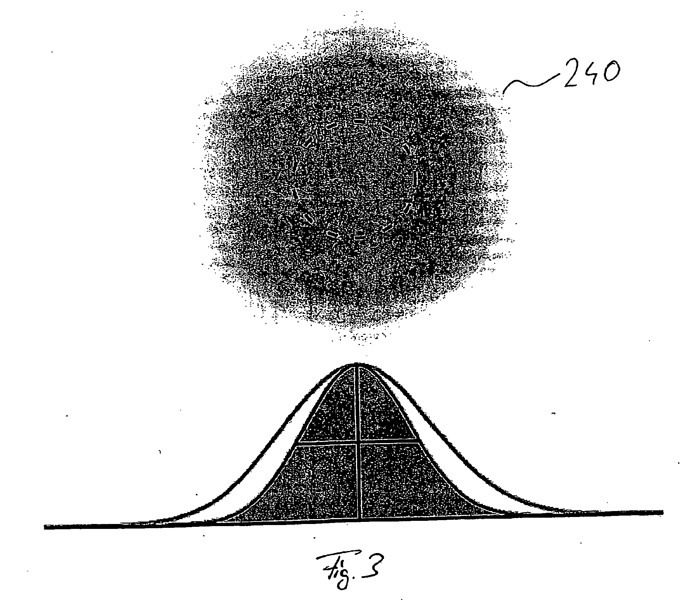

Die Scannereinheit 60 weist zwei diffraktive optische Elemente 62, 64 auf, welche in den Strahlengang des SLM^{®}- oder SLS-Laserstrahls 200 eingeklappt.werden können, um den SLM^{®}- oder SLS-Laserstrahl 200 in mehrere Teillaserstrahlen aufzuteilen. Gemäß der in den Figuren 1 und 2 gezeigten ersten Ausführungsform sind die diffraktiven optischen Elemente 62, 64 vor einem Ablenkspiegel 68 zum Ablenken der Teillaserstrahlen angeordnet. Es ist ebenso möglich, die diffraktiven optischen Elemente 62, 64 nach dem Ablenkspiegel 68 anzuordnen. Das erste diffraktive optische Element 62 wird dann in den Strahlengang des SLM^{®}- oder SLS-Laserstrahls 200 gebracht, wenn eine flächige Belichtung (in den Hatches) der Pulverschicht erfolgt. Hingegen wird das zweite diffraktive optische Element 64 in den Strahlengang hineingebracht (während das erste diffraktive optische Element 62 aus dem Strahlengang herausgeklappt wird), wenn die äußeren Konturen (Boundaries) des zu fertigenden Werkstücks erzeugt werden. Zwei Beispiele dafür, wie das erste diffraktive optische Element 62 den SLM^{®}- oder SLS-Laserstrahl 200 in Teilstrahlen aufspaltet, werden in Bezug auf Figuren 3 bis 5 erläutert.

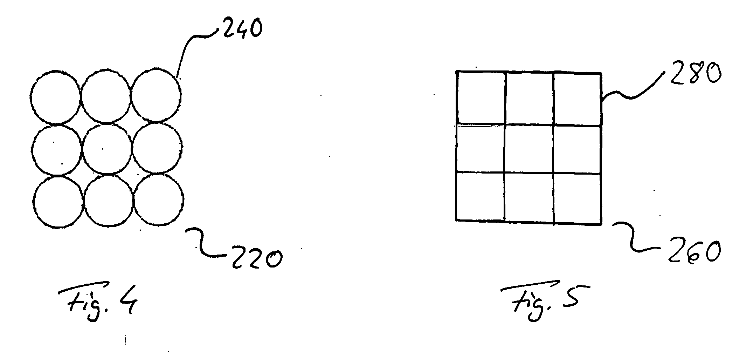

Figur 3 illustriert schematisch ein Teillaserstrahlprofil 240 eines der mehreren durch das erste diffraktive optische Element 62 aus dem SLM^{®}- oder SLS-Laserstrahl 200 erzeugten Teillaserstrahls. Wie in Figur 3 gezeigt, weist der Teillaserstrahl als Strahlprofil 240 ein Profil mit gaußförmiger Verteilung auf. Das bedeutet, dass die Intensität des kreisförmigen Teilstrahprofils 240 in dessen Mittelpunkt ein Maximum aufweist und nach außen hin gemäß der gaußschen Glockenkurve abnimmt. Wird nun durch das erste diffraktive optische Element 62 der SLM^{®}- oder SLS-Laserstrahl 200 in neun solcher Teillaserstrahlen aufgeteilt, entsteht ein wie in Figur 4 schematisch dargestelltes, aus den neun Teilstrahlprofilen (Unterstrahlprofilen) 240 gebildetes Gesamtstrahlprofil 220. Jeder der Teilstrahlen weist ungefähr ein Neuntel der Intensität des Einzellaserstrahls (des SLM^{®}- oder SLS-Laserstrahls 200) auf. Somit bleibt die Gesamtintensität des SLM^{®}- oder SLS-Laserstrahls 200 zumindest nahezu erhalten, wird jedoch flächig auf eine Vielzahl von Teillaserstrahlen (im beispielhaften Fall der Figuren 4 und 5 auf neun Teillaserstrahlen) verteilt. Auf diese Weise kann ein größerer Bereich der Pulverschicht bestrahlt werden. Das in Figur 4 gezeigte aus den neun Teillaserstrahlprofilen 240 gebildete Gesamtstrahlprofil 220, beschreibt ein aus drei mal drei Unterstrahlprofilen 240 bestehendes quadratisches Feld. Aufgrund der gaußchen Intensitätsverteilung in jedem Teillaserstrahlprofil 240, ist die Intensität in dem Gesamtstrahlprofil 220 zwar flächiger als bei dem Einzelstrahlprofil des SLM^{®}- oder SLS-Laserstrahls 200, jedoch nicht exakt gleichmäßig verteilt und weist, verglichen mit dem Einzelstrahlprofil, abgeschwächte Intensitätsmaxima sowie Intensitätsminima auf.

Zur Erzeugung eines homogeneren Strahlprofils sowohl in den Teilstrahlen als auch in dem aus den Teilstrahlen gebildeten Gesamtstrahlprofil 220, kann das erste diffraktive optische Element 62 derart ausgebildet sein, nicht das in Figur 4 skizzierte Gesamtstrahlprofil 220 (aus den Teilstrahlprofilen 240 mit gaußscher Intensitätsverteilung), sondern das schematisch in Figur 5 gezeigte Gesamtstrahlprofil 260 mit den Teilstrahlprofilen 280 zu erzeugen. Die Teilstrahlprofile 280 aus Figur 5 sind jeweils als sogenanntes Top-Hat Profil ausgebildet und weisen eine gleichförmige Intensitätsverteilung über das gesamte Teilstrahlprofil 280 (Querschnitt des Teillaserstrahls) auf. Dadurch weist auch das aus den einzelnen Teilstrahlprofilen 280 gebildete Gesamtstrahlprofil 260 (wie in Figur 5 gezeigt) eine gleichförmige Intensitätsverteilung auf. Auf diese Weise kann zum einen ein größerer Bereich der Pulverschicht als ohne Aufspaltung des SLM^{®}- oder SLS-Laserstrahls 200 gleichzeitig bestrahlt werden, was die Geschwindigkeit des Herstellungsprozesses und damit die Produktivität erhöht. Zudem werden Intensitätsspitzen verringert oder vermieden, da die Gesamtintensität des SLM^{®}- oder SLS-Laserstrahls 200 homogen auf eine größere Fläche verteilt ist.

Beide in den Figuren 4 und 5 gezeigten Strahlprofile eignen sich für die flächige Bearbeitung (Belichtung oder Bestrahlung) in den Hatches der Pulverschicht und können jeweils durch ein entsprechend ausgebildetes erstes diffraktives optisches Element 62 erzeugt werden. Zur Bearbeitung der äußeren Konturen wird anstelle des ersten diffraktiven optischen Elements 62 das zweite diffraktive optische Element 64 in den Strahlengang geklappt. Auch das zweite diffraktive optische Element 64 kann zur Ausbildung eines der in den Figuren 4 und 5 gezeigten Strahlprofile ausgebildet sein.

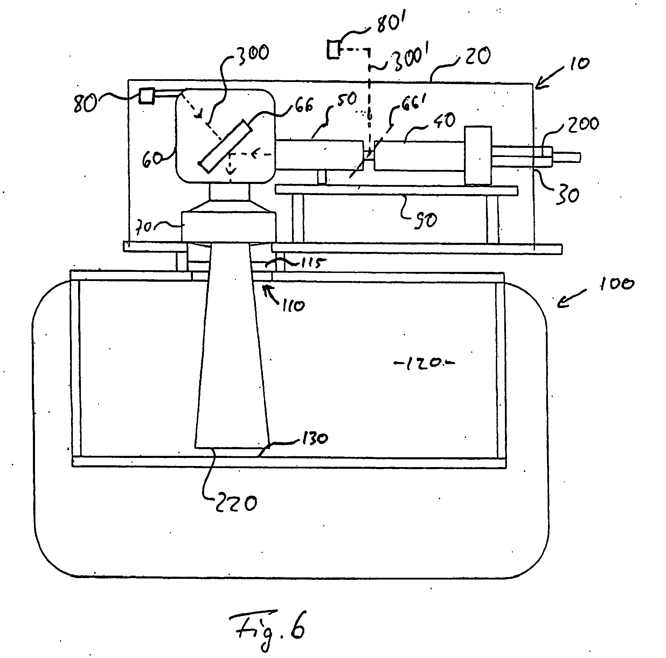

Figur 6 zeigt eine schematische Darstellung einer zweiten Ausführungsform einer optischen Bestrahlungseinheit 10 als Teil einer Anlage 100 zur Herstellung von Werkstücken. Anstelle des ersten und zweiten diffraktiven optischen Elements 62, 64 weist die Scannereinheit 60 gemäß der zweiten Ausführungsform der optischen Bestrahlungseinheit 10 einen Einkoppelspiegel 66 auf. Über den Einkoppelspiegel 66 wird ein von außen zugeführter Diodenlaserstrahl 300 bei Bedarf in den Strahlengang des SLM^{®}- oder SLS-Laserstrahls 200 eingebracht. Der Diodenlaserstrahl 300 wird durch einen Diodenlaser 80 bereitgestellt und weist eine Wellenlänge von 808 nm auf. Alternativ zu dem Diodenlaser 80 und dem Einkoppelspiegel 66 kann ein Diodenlaserstrahl 300' von einem Diodenlaser 80' erzeugt und, wie in Figur 6 gezeigt, über den zwischen dem Strahlaufweiter 40 und der Fokussierlinse 50 angeordneten Einkoppelspiegel 66' in den Strahlengang des SLM^{®}- oder SLS-Laserstrahls 200 eingekoppelt werden. Da der Diodenlaserstrahl 300, 300' eine von dem SLM^{®}- oder SLS-Laserstrahl 200 um mehr als 200 nm abweichende Wellenlänge aufweist, ist das Fenster 110 derart ausgebildet, sowohl eine Wellenlänge des SLM^{®}- oder SLS-Laserstrahls 200 im Bereich von 1075 nm als auch eine Wellenlänge des Diodenlaserstrahls 300, 300' im Bereich von 808 nm durchzulassen.

Der Diodenlaserstrahl 300, 300' wird dabei so in den des SLM^{®}- oder SLS-Laserstrahl 200 über den Einkoppelspiegel 66, 66' eingekoppelt, dass er auf den gleichen Punkt auf der Pulverschicht auftrifft und entlang des gleichen Weges auf der Pulverschicht geführt wird wie der des SLM^{®}- oder SLS-Laserstrahl 200. Da der Einkoppelspiegel 66 nach der Fokussiereinheit 50 angeordnet ist, wird lediglich der SLM^{®}- oder SLS-Laserstrahl 200 fokussiert, während der Diodenlaserstrahl 300 unfokussiert um den Fokuspunkt des SLM^{®}- oder SLS-Laserstrahls 200 auf der Pulveroberfiäche auftrifft. Dadurch wird dieser Punkt auf der Pulverschicht durch den Diodenlaserstrahl 300 ortselektiv vorgeheizt. Das ortselektive Vorheizen mittels des Diodenlaserstrahls 300 aufgrund der lokalen Aufheizung am Auftreffpunkt des SLM^{®}- oder SLS-Laserstrahls 200 führt zu einer Verringerung des thermischen Gradienten in der Pulverschicht, welche eine Ursache von hohen Eigenspannungen in den SLM^{®} oder SLS Werkstücken sind. Durch die Verringerung bzw. Eliminierung der thermischen Gradienten aufgrund der ortselektiven lokalen Vorheizung, können Werkstücke mit besseren Eigenschaften hergestellt werden.

Alternativ zu der Verwendung des Diodenlaserstrahls 300 zur Vorheizung am Fokuspunkt des SLM^{®}- oder SLS-Laserstrahls 200, ist es auch denkbar, den Diodenlaserstrahl 300' ebenfalls auf einen Fokuspunkt zu fokussieren (dies geschieht, da der Einkoppelspiegel 66' vor der Fokussiereinheit 50 angeordnet ist). Der fokussierte Diodenlaserstrahl 300' kann dann zur Bestrahlung der Pulverschicht (und damit zum Schmelzen oder Sintern) vor dem SLM^{®}- oder SLS-Laserstrahl 200 geführt oder dem SLM^{®}- oder SLS-Laserstrahl 200 nachgeführt werden.

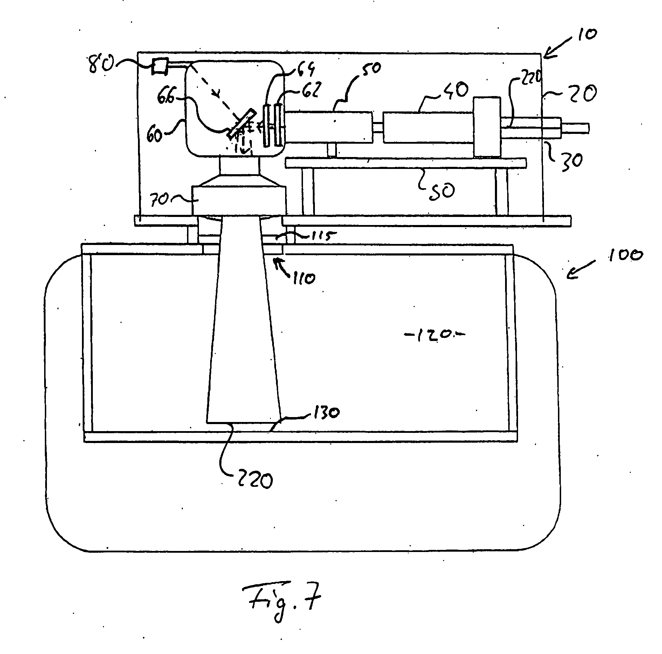

Figur 7 zeigt eine schematische Darstellung einer dritten Ausführungsform einer optischen Bestrahlungseinheit 10 als Teil einer Anlage 100 zur Herstellung von Werkstücken, die eine Kombination der ersten Ausführungsform aus Figuren 1 und 2 und der zweiten Ausführungsform aus Figur 6 darstellt. Bei der dritten Ausführungsform sind zusätzlich zu dem Einkoppelspiegel 66 auch die zwei diffraktiven optischen Elemente 62, 64 in der Scannereinheit 60 angeordnet. Hierbei wird, wie zuvor beschrieben, die Intensitätsverteilung des SLM^{®}- oder SLS-Laserstrahls 200 mittels der diffraktiven optischen Elemente 62, 64 homogenisiert. Als Abwandlung der dritten Ausführungsform ist es denkbar, die Reihenfolge des Einkoppelspiegels 66 und der zwei diffraktiven optischen Elemente 62, 64 in Richtung des Strahlengangs des SLM^{®}- oder SLS-Laserstrahls 200 zu vertauschen, so dass zunächst der Diodenlaserstrahl 60 mittels des Einkoppelspiegels 66 in den SLM^{®}- oder SLS-Laserstrahl 200 eingekoppelt wird und die Kopplung aus Diodenlaserstrahl 300 und SLM^{®}- oder SLS-Laserstrahl 200 mittels der diffraktiven optischen Elemente 62, 64 in der zuvor beschriebenen Weise homogenisiert wird. Auch ist es denkbar, den Einkoppelspiegel 66', wie in Figur 6 gezeigt, vor der Fokussiereinheit 50 anzuordnen.

## Patentansprüche

1. Anlage (100) zur Herstellung von Werkstücken durch Bestrahlen von Pulverschichten eines Rohstoffpulvers mit Laserstrahlung, umfassend:
- einen Träger (130), auf welchen Pulverschichten des Rohstoffpulvers aufbringbar sind;
- eine optische Bestrahlungseinheit (10), umfassend:
- optische Komponenten (40, 50, 60, 70) zum Führen und Fokussieren eines Strahlengangs eines ersten Laserstrahls (200), und
- eine optische Teil- bzw. Koppeleinheit (62, 64, 66) zum Aufteilen des ersten Laserstrahls (200) in zumindest zwei Teillaserstrahlen mit einer jeweils gleichen und von der Intensität des ersten Laserstrahls (200) verschiedenen Intensität, wobei die optische Teil- bzw. Koppeleinheit (62, 64, 66) dazu ausgebildet ist, ein erstes Strahlprofil (220, 260) des ersten Laserstrahls (200) durch das Aufteilen des ersten Laserstrahls (200) in die zumindest zwei Teillaserstrahlen zu erzeugen, und wobei die optische Teil- bzw. Koppeleinheit (62, 64, 66) ein diffraktives optisches Element (62) zum Erzeugen des ersten Strahlprofils (220, 260) des ersten Laserstrahls (200) durch das Aufteilen des ersten Laserstrahls (200) in die zumindest zwei Teillaserstrahlen aufweist; und
- eine erste Bestrahlungsquelle zum Bereitstellen des ersten Laserstrahls (200); wobei die optische Bestrahlungseinheit (10) dazu ausgebildet und angeordnet ist, eine auf dem Träger (130) aufgebrachte Pulverschicht mit den Teillaserstrahlen des ersten Laserstrahls (200) zu bestrahlen, um aus dem Rohstoff durch ein generatives Schichtbauverfahren ein Werkstück herzustellen.

2. Anlage (100) nach Anspruch 1, wobei die optische Teil- bzw. Koppeleinheit (62, 64, 66) ferner ausgebildet ist zum Einkoppeln eines zweiten Laserstrahls (300) mit einer von der Wellenlänge des ersten Laserstrahls (200) verschiedenen Wellenlänge in den Strahlengang des ersten Laserstrahls (200).

3. Anlage (100) nach einem der vorhergehenden Ansprüche, wobei jeder Teillaserstrahl ein kreisförmiges Strahlprofil (240) mit gaußförmiger Intensitätsverteilung aufweist oder jeder Teillaserstrahl ein rechteckiges Strahlprofil (280) mit gleichförmiger Intensitätsverteilung aufweist.

4. Anlage (100) nach Anspruch 3, wobei die optische Teil- bzw. Koppeleinheit (62, 64, 66) dazu ausgebildet ist, den ersten Laserstrahl (200) derart in neun Teillaserstrahlen mit einer jeweils gleichen und von der Intensität der ersten Laserstrahlung (200) verschiedenen Intensität aufzuteilen, dass die Strahlprofile (240, 280) der neun Teillaserstrahlen in einer zu dem Strahlengang des ersten Laserstrahls (200) senkrechten Ebene ein zumindest nahezu quadratisches Gesamtstrahlprofil (220, 260) ausbilden.

5. Anlage (100) nach einem der Ansprüche 3 bis 4, wobei die optische Teil- bzw. Koppeleinheit (62, 64, 66) weiter ein zweites diffraktives optisches Element (64) zum Erzeugen eines von dem ersten Strahlprofil (220, 260) verschiedenen zweiten Strahlprofils des ersten Laserstrahls (200) durch das Aufteilen des ersten Laserstrahls in die zumindest zwei Teillaserstrahlen aufweist, wobei das erste (62) und/oder das zweite diffraktive optische Element (64) in Reaktion auf eine Anweisung einer mit der optischen Bestrahlungseinheit (10) verbundenen Steuereinheit in den Strahlengang des ersten Laserstrahls (200) einbringbar sind.

6. Anlage (100) nach einem der vorhergehenden Ansprüche, wobei der erste Laserstrahl (200) eine Wellenlänge von 1064 nm bis 1075 nm aufweist und der zweite Laserstrahl (300) eine Wellenlänge von 808 nm bis 980 nm aufweist.

7. Anlage (100) nach Anspruch 1, wobei die optische Bestrahlungseinheit (10) ferner dazu ausgebildet ist, die Pulverschicht mit der Kopplung aus dem ersten (200) und dem zweiten Laserstrahl, (300) zu bestrahlen, um aus dem Rohstoff durch ein generatives Schichtbauverfahren ein Werkstück herzustellen.

8. Anlage (100) nach Anspruch 7, wobei die Anlage (100) weiter eine zweite Bestrahlungsquelle (80) zur Bereitstellung des zweiten Laserstrahls (300) aufweist, und die Anlage (100) eine Steuereinrichtung aufweist, welche dazu eingerichtet ist, die optische Bestrahlungseinheit (10) derart zu steuern, dass der erste Laserstrahl (200) und der zweite Laserstrahl (300) am gleichen Punkt auf der Pulverschicht auftreffen.

9. Anlage (100) nach Anspruch 8, wobei die Steuereinrichtung dazu eingerichtet ist, die optische Bestrahlungseinheit (10) derart zu steuern, dass der erste Laserstrahl (200) und der zweite Laserstrahl (300) den gleichen Weg auf der Pulverschicht beschreiben.

10. Anlage (100) nach Anspruch 8 oder 9, wobei die Steuereinheit dazu eingerichtet ist, die optische Bestrahlungseinheit (10) derart zu steuern, dass der zweite Laserstrahl (300) unfokussiert um den Fokus des ersten Laserstrahls (200) auf die Pulverschicht auftrifft.

11. Anlage (100) nach einem der Ansprüche 1 bis 10, wobei die Anlage (100) weiter eine Vielzahl von Diodenlasern aufweist, die derart über der Pulverschicht angeordnet und dazu ausgebildet sind, mit ihrer Diodenlaserstrahlung die Pulverschicht homogen vorzuheizen.

12. Verfahren zur Herstellung von Werkstücken durch Bestrahlen von Pulverschichten eines Rohstoffpulvers mit Laserstrahlung mit Hilfe der Anlage nach einem der Ansprüche 1 bis 11, mit den Schritten:
- Aufbringen einer Pulverschicht des Rohstoffpulvers auf den Träger (130),
- Aufteilen eines ersten Laserstrahls (200) in zumindest zwei Teillaserstrahlen mit einer jeweils gleichen und von der Intensität des ersten Laserstrahls (200) verschiedenen Intensität, um ein erstes Strahlprofil (220, 260) des ersten Laserstrahls (200) durch das Aufteilen des ersten Laserstrahls (200) in die zumindest zwei Teillaserstrahlen zu erzeugen, und
- Bestrahlen der auf dem Träger (130) aufgebrachten Pulverschicht mit den Teillaserstrahlen des ersten Laserstrahls (200), um aus dem Rohstoff durch ein generatives Schichtbauverfahren ein Werkstück herzustellen.

13. Verfahren nach Anspruch 12, wobei das Verfahren weiter umfasst Einkoppeln eines zweiten Laserstrahls (300) mit einer von der Wellenlänge des ersten Laserstrahls (200) verschiedenen Wellenlänge in den ersten Laserstrahl (200), wobei der Schritt des Bestrahlens weiter umfasst Bestrahlen der auf dem Träger (130) aufgebrachten Pulverschicht mit der Kopplung aus dem ersten (200) und dem zweiten Laserstrahl (300), um aus dem Rohstoff durch ein generatives Schichtbauverfahren ein Werkstück herzustellen.

## Claims

1. Plant (100) for producing work pieces by irradiating powder layers of a raw material powder with laser radiation, comprising:
- a carrier (130), on which powder layers of the raw material powder can be applied;
- an optical irradiation unit (10), comprising:
- optical components (40, 50, 60, 70) for guiding and focusing a beam path of a first laser beam (200), and
- an optical splitting and/or coupling unit (62, 64, 66) for splitting the first laser beam (200) into at least two laser sub-beams having an intensity, which in each case is equal and differs from the intensity of the first laser beam (200), wherein the optical splitting and/or coupling unit (62, 64, 66) is configured to produce a first beam profile (220, 260) of the first laser beam (200) by splitting the first laser beam (200) into the at least two laser sub-beams, and wherein the optical splitting and/or coupling unit (62, 64, 66) includes a diffractive optical element (62) for producing the first beam profile (220, 260) of the first laser beam (200) by the splitting of the first laser beam (200) into the at least two laser sub-beams; and
- a first radiation source for providing the first laser beam (200);
wherein the optical irradiation unit (10) is configured and arranged to irradiate a powder layer applied on the carrier (130) by the laser sub-beams of the first laser beam (200) in order to produce a work piece from the raw material by an additive layering process.

2. Plant (100) according to claim 1, wherein the optical splitting and/or coupling unit (62, 64, 66) is further configured for coupling a second laser beam (300) with a wavelength differing from the wavelength of the first laser beam (200) into the beam path of the first laser beam (200).

3. Plant (100) according to one of the preceding claims, wherein each laser sub-beam has a circular beam profile (240) with Gaussian intensity distribution or each laser sub-beam has a rectangular beam profile (280) with uniform intensity distribution.

4. Plant (100) according to claim 3, wherein the optical splitting and/or coupling unit (62, 64, 66) is configured to split the first laser beam (200) into nine laser sub-beams having an intensity, which in each case is equal and differs from the intensity of the first laser beam (200), in such a manner that the beam profiles (240, 280) of the nine laser sub-beams form an at least almost square overall beam profile (220, 260) in a plane perpendicular to the beam path of the first laser beam (200).

5. Plant (100) according to one of claims 3 to 4, wherein the optical splitting and/or coupling unit (62, 64, 66) further has a second diffractive optical element (64) for producing a second beam profile of the first laser beam (200) that differs from the first beam profile (220, 260) by splitting the first laser beam into the at least two laser sub-beams, wherein the first (62) and/or the second diffractive optical element (64) can be brought into the beam path of the first laser beam (200) in response to an instruction from a control unit connected to the optical irradiation unit (10).

6. Plant (100) according to one of the preceding claims, wherein the first laser beam (200) has a wavelength of from 1064 nm to 1075 nm and the second laser beam (300) has a wavelength of from 808 nm to 980 nm.

7. Plant (100) according to claim 1, wherein the optical irradiation unit (10) is further configured to irradiate the powder layer with the coupling of the first (200) and the second laser beam (300) in order to produce a work piece from the raw material by an additive layering process.

8. Plant (100) according to claim 7, wherein the plant (100) further comprises a second irradiation source (80) for providing the second laser beam (300) and the plant (100) comprises a control device, which is configured to control the optical irradiation unit (10) in such a manner that the first laser beam (200) and the second laser (300) strike the powder layer at the same point.

9. Plant (100) according to claim 8, wherein the control device is configured to control the optical irradiation unit (10) in such a manner that the first laser beam (200) and the second laser beam (300) describe the same path on the powder layer.

10. Plant (100) according to claim 8 or 9, wherein the control unit is configured to control the optical irradiation unit (10) in such manner that the second laser beam (300) strikes the powder layer unfocused around the focus of the first laser beam (200).

11. Plant (100) according to one of claims 1 to 10, wherein the plant (100) further comprises a plurality of diode lasers, which are arranged above the powder layer and configured to preheat the powder layer homogenously with their diode laser radiation.

12. Method for producing work pieces by irradiating powder layers of a raw material with laser radiation by means of the plant according to one of claims 1 to 11, comprising the steps:
- applying a powder layer of the raw material powder to a carrier (130),
- splitting a first laser beam (200) into at least two laser sub-beams having an intensity, which in each case is equal and differs from the intensity of the first laser beam (200), in order to produce a first beam profile (220, 260) of the first laser beam (200) by splitting the first laser beam (200) into the at least two laser sub-beams, and
- irradiating the powder layer applied to the carrier (130) with the laser sub-beams of the first laser beam (200) in order to produce a work piece from the raw material by an additive layering process.

13. Method according to claim 12, wherein the method further comprises coupling a second laser beam (300) with a wavelength differing from the wavelength of the first laser beam (200) into the first laser beam (200), wherein the step of irradiating further comprises irradiating the powder layer applied to the carrier (130) with the coupling of the first (200) and the second laser beam (300) in order to produce a work piece from the raw material by an additive layering process.

## Revendications

1. Installation (100) destinée à la fabrication de pièces par irradiation de couches de poudre d'une poudre de matière première avec un rayonnement laser, comprenant
- un substrat (130) sur lequel des couches de poudre de la poudre de matière première peuvent être appliquées ;
- une unité optique d'irradiation (10), comprenant :
- des composants optiques (40, 50, 60, 70) pour guider et focaliser un trajet des rayons d'un premier faisceau laser (200), et
- une unité optique de division et/ou de couplage (62, 64, 66) pour diviser le premier faisceau laser (200) en au moins deux faisceaux laser partiels respectivement de même intensité et d'intensité différente de celle du premier faisceau laser (200), laquelle unité optique de division et/ou de couplage (62, 64, 66) étant conçue pour produire un premier profil de faisceau (220, 260) du premier faisceau laser (200) par la division du premier faisceau laser (200) en lesdits au moins deux faisceaux laser partiels, et laquelle unité optique de division et/ou de couplage (62, 64, 66) présentant un élément optique diffractif (62) pour produire le premier profil de faisceau (220, 260) du premier faisceau laser (200) par la division du premier faisceau laser (200) en lesdits au moins deux faisceaux laser partiels ; et
- une première source d'irradiation pour fournir le premier faisceau laser (200) ;
l'unité optique d'irradiation (10) étant conçue et agencée pour irradier une couche de poudre appliquée sur le substrat (130) avec les faisceaux laser partiels du premier faisceau laser (200) afin de fabriquer une pièce par un procédé génératif de construction couche par couche à partir de la matière première.

2. Installation (100) selon la revendication 1, dans laquelle l'unité optique de division et/ou de couplage (62, 64, 66) est en outre conçue pour coupler un deuxième faisceau laser (300) d'une longueur d'onde différente de la longueur d'onde du premier faisceau laser (200) dans le trajet des rayons du premier faisceau laser (200).

3. Installation (100) selon l'une des revendications précédentes, dans laquelle chaque faisceau laser partiel présente un profil de faisceau circulaire (240) avec une répartition d'intensité gaussienne ou chaque faisceau laser partiel présente un profil de faisceau rectangulaire (280) avec une répartition d'intensité uniforme.

4. Installation (100) selon la revendication 3, dans laquelle l'unité optique de division et/ou de couplage (62, 64, 66) est conçue pour diviser le premier faisceau laser (200) en neuf faisceaux laser partiels respectivement de même intensité et d'intensité différente de celle du premier faisceau laser (200) de façon que les profils de faisceau (240, 280) des neuf faisceaux laser partiels forment un profil de faisceau total (220, 260) au moins approximativement carré dans un plan perpendiculaire au trajet des rayons du premier faisceau laser (200).

5. Installation (100) selon l'une des revendications 3 à 4, dans laquelle l'unité optique de division et/ou de couplage (62, 64, 66) présente en outre un deuxième élément optique diffractif (64) pour produire un deuxième profil de faisceau du premier faisceau laser (200) différent du premier profil de faisceau (220, 260) par la division du premier faisceau laser en lesdits au moins deux faisceaux laser partiels, le premier (62) et/ou le deuxième élément optique diffractif (64) pouvant être placés dans le trajet des rayons du premier faisceau laser (200) en réaction à une instruction d'une unité de commande reliée à l'unité optique d'irradiation (10).

6. Installation (100) selon l'une des revendications précédentes, dans laquelle le premier faisceau laser (200) présente une longueur d'onde de 1064 nm à 1075 nm et le deuxième faisceau laser (300) une longueur d'onde de 808 nm à 980 nm.

7. Installation (100) selon la revendication 1, dans laquelle l'unité optique d'irradiation (10) est en outre conçue pour irradier la couche de poudre avec le couplage du premier (200) et du deuxième faisceau laser (300) afin de fabriquer une pièce par un procédé génératif de construction couche par couche à partir de la matière première.

8. Installation (100) selon la revendication 7, dans laquelle ladite installation (100) présente en outre une deuxième source d'irradiation (80) pour fournir le deuxième faisceau laser (300), et dans laquelle ladite installation (100) présente un dispositif de commande qui est conçu pour commander l'unité optique d'irradiation (10) de façon que le premier faisceau laser (200) et le deuxième faisceau laser (300) atteignent la couche de poudre au même point.

9. Installation (100) selon la revendication 8, dans laquelle le dispositif de commande est conçu pour commander l'unité optique d'irradiation (10) de façon que le premier faisceau laser (200) et le deuxième faisceau laser (300) décrivent le même chemin sur la couche de poudre.

10. Installation (100) selon la revendication 8 ou 9, dans laquelle l'unité de commande est conçue pour commander l'unité optique d'irradiation (10) de façon que le deuxième faisceau laser (300) atteigne la couche de poudre de manière non focalisée autour du foyer du premier faisceau laser (200).

11. Installation (100) selon l'une des revendications 1 à 10, dans laquelle ladite installation (100) présente en outre une pluralité de diodes laser qui sont agencées au-dessus de la couche de poudre et conçues de manière à préchauffer la couche de poudre de manière homogène par leur rayonnement de diode laser.

12. Procédé de fabrication de pièces par irradiation de couches de poudre d'une poudre de matière première avec un rayonnement laser à l'aide d'une installation selon l'une des revendications 1 à 11, comprenant les étapes suivantes :
- application d'une couche de poudre de la poudre de matière première sur le substrat (130),
- division d'un premier faisceau laser (200) en au moins deux faisceaux laser partiels respectivement de même intensité et d'intensité différente de celle du premier faisceau laser (200) pour produire un premier profil de faisceau (220, 260) du premier faisceau laser (200) par la division du premier faisceau laser (200) en lesdits au moins deux faisceaux laser partiels, et
- irradiation de la couche de poudre appliquée sur le substrat (130) avec les faisceaux laser partiels du premier faisceau laser (200) afin de fabriquer une pièce par un procédé génératif de construction couche par couche à partir de la matière première.

13. Procédé selon la revendication 12, dans lequel ledit procédé comprend en outre le couplage d'un deuxième faisceau laser (300) d'une longueur d'onde différente de la longueur d'onde du premier faisceau laser (200) dans le premier faisceau laser (200), l'étape d'irradiation comprenant en outre l'irradiation de la couche de poudre appliquée sur le substrat (130) avec le couplage du premier (200) et du deuxième faisceau laser (300) afin de fabriquer une pièce par un procédé génératif de construction couche par couche à partir de la matière première.
